# EUROPEAN PATENT APPLICATION

(11) **EP 2 821 380 A1**
(43) Date of publication of application: **07.01.2015**
(21) Application number: 13192799.8
(22) Date of filing: 14.11.2013
(51) Int. Cl.: C04B 28/02, C04B 28/04

(54) **Method of production of a composite cellular concrete**

(30) Priority: 05.07.2013 RU 2013131123
(71) Applicant: Yastremskiy, Evgeniy Nikolaevich, St. Petersburg 195196 (RU); Emelianov, Ilia Aleksandrovich, Poselok Kovrovo 238553 (RU)
(72) Inventor: Yastremskiy, Evgeniy Nikolaevich, St. Petersburg 195196 (RU); Emelianov, Ilia Aleksandrovich, Poselok Kovrovo 238553 (RU)
(74) Representative: Sloboshanin, Sergej

(57) **Abstract**

The invention relates to the field of building materials and can be used for producing naturally hardening non-autoclaved composite cellular concrete.

The objective of the invention is an improvement of the physical and mechanical properties of the obtained dry mixture by obtaining a homogenous uniform mass with increased strength, frost-resistance, and a decrease of the specific weight, and also a facilitation of its use on any construction site for the further production of cellular concrete according to the principle of "simply dilute with water".

The objective is achieved in that a previously prepared zeolite admixture containing nanotubes is additionally introduced into the obtained compound, whereafter the entire compound is subjected to mechanical impact-type activation at increased speeds on impact-type disintegrator-activators.

The one-layered or multi-layered nanotubes are supplied into the mixer after preparatory mixing in water in pulverised shape by means of an atomizer, the compound being mixed in the mechanical activator with a speed of 1500 to 3000 rpm.

The use of the zeolite admixture, which contains carbon nanotubes, enables a substantial increase of the strength of the non-autoclaved cellular concrete, and also to accelerate its hardening.

The subsequent treatment of the compound of dry mixture by means of a thorough mixing of all components in the mixer (any mixer for producing dry mixtures) for producing a homogenous mixture, and thereafter its activation by IDA (impact-type disintegrator-activator) technology at increased speeds in a mechanical activator facilitates an improvement of the physical and mechanical characteristics of the obtained composite cellular concrete by increasing its homogeneity, strength, and the uniformity of the pore distribution. The specific weight of the concrete is diminished (250-300 kg/m³).

## Description

The invention relates to the field of building materials and can be used for producing naturally hardening non-autoclaved composite cellular concrete.

A "Method for Manufacturing a Raw Mix for Cellular Concrete" is known, described in RU Patent 2472753, International Patent Classification C04B 38/02, filed June 21, 2011, published January 20, 2013.

The known method includes the preparation of a dry mixture of Portland cement of the 500 DO brand and silica sand, which is preliminarily dried and ground, while it is simultaneously mixed in a mechanical activator. In parallel with the process of mixing the dry mixture, a structure formation of a measured amount of water is carried out, and the required amount of modifying admixture is dissolved in the water. Subsequently the obtained aqueous solution is added to the dry mixture, and mixing is carried out for at least 5 minutes, after which aluminium powder and caustic soda are added, and mixing is continued for another 3 minutes, with the following proportions of components in the mixture:

| | |
|---|---|
| Portland cement | 20-75; |
| silica sand | 20-75; |
| modifying admixture | 0.1-6.0; |
| aluminium powder | 0.007-0.5; |
| caustic soda | 0.0005-0.005; |
| water | the rest. |

One of the basic shortcomings of the known method is, in our view, the complexity and expensiveness of the technical process, in particular the necessity for preliminary drying and grinding of the silica sand, which requires a separate drying complex. Another shortcoming of this method is that liquid ingredients are used in the production of the raw mixture, which in the mixing process make the mixture obtain a slurry-like state. This in turn results in the necessity to use special equipment (turbulence mixers of a certain brand with mixing devices, foaming agents etc.) and finally results in a more complicated and expensive technical process and in difficulties in the production of porous concrete directly at the construction site.

A "Method for Manufacturing Aerated Concrete" is known, described in RU Patent 2465252, International Patent Classification C04B 40/00, C04B 38/02, filed May 12, 2011, published October 27, 2011.

The known method includes the preparation of a solution-type mixture of Portland cement, ground silica sand, gypsum and water, which is made in a mixer. Subsequently, resonance centres in the form of separate agglomerates of finely-dispersed particles are formed in the concrete mixture, for which purpose an unpurified aluminium powder is introduced into the mixture, and mixing is carried out at a rotational speed of the blades of 180 rpm. Subsequently an ultrasound treatment of the mixture is carried out repeatedly, and purified aluminium powder is introduced into it, and it is mixed again at a speed of 620 rpm.

Another shortcoming of this method is the complexity of the technical process and its expensiveness due to the necessity of ultrasound, the treatment of the mixture (which requires special equipment), the difficulty with the preparation of large amounts of the mixture (the complex two-speed mixer holds a limited amount). The use of aluminium powder cleansed of paraffin also makes the process more difficult and more expensive. As a consequence, this method essentially limits the capacity for preparing aerated concrete immediately on construction sites.

The most pertinent prior art to our invention with respect to the technical essence and the achieved result is a "Method for Manufacturing Cellular Concrete", described in RU Patent 2253636, International Patent Classification C04B 40/00, C04B 38/02, filed December 26, 2003, published June 10, 2005.

The method taken as the most pertinent prior art is implemented as follows:
Water and cement, or water, cement and sand are supplied into a hollow mixer with an activator, and all components are mixed for 5-15 minutes. Subsequently a previously prepared dry pore-forming mixture is introduced into the obtained solution, and it is again mixed for 15-60 seconds.

The following can be considered another shortcoming of this method: The method requires mixing water and cement together in a conventional way first, and subsequently, after introduction of the pore-forming mixture, a repetition of the mixing. Due to the simple mechanical mixing, a homogeneity and uniformity of the obtained mass is not achieved, since some time after the completion of the process the heavy fractions sink to the bottom, while the light ones stay on the surface. This has a negative effect on the physical and mechanical properties of the concrete, particularly on its strength, frost-resistance and specific weight. Moreover, the known method requires the use of a special hollow mixer having a small volume (not more than 1 m³).

Another shortcoming of the method is the complicated shifting of the equipment during construction of buildings, and also the complicated supply of the concrete mix to the storeys.

The objective of the invention is an improvement of the physical and mechanical properties of the obtained dry mixture by obtaining a homogenous uniform mass with increased strength, frost-resistance, and a decrease of the specific weight, and also a facilitation of its use on any construction site for the further production of cellular concrete according to the principle of "simply dilute with water".

The objective is reached in that in a method for producing composite cellular concrete, which consists of supplying the components of the compound into a mixer and mixing them, introducing a dry pore-forming mixture into the obtained compound, and subsequently mixing them together, a previously prepared zeolite admixture containing nanotubes is additionally introduced into the obtained compound, and the entire compound is subjected to mechanical impact-type activation at increased speeds on impact-type disintegrator-activators.

The one-layered or multilayered nanotubes are supplied into the mixer after preparatory mixing in water in pulverised form by means of an atomizer, the compound being mixed in the mechanical activator with a speed of 1500 to 3000 rpm.

The use of the zeolite admixture, which contains carbon nanotubes, enables a substantial increase of the strength of the non-autoclaved cellular concrete, and also to accelerate its hardening.

The subsequent treatment of the compound of dry mixture by means of a thorough mixing of all components in the mixer (any mixer for producing dry mixtures) for producing a homogenous mixture, and thereafter its activation by IDA (impact-type disintegrator-activator) technology at increased speeds in a mechanical activator facilitates an improvement of the physical and mechanical characteristics of the obtained composite cellular concrete by increasing its homogeneity and the uniformity of the pore distribution. The strength and hardening speed are increased almost by 150%, the specific weight is diminished (250-300 kg/m³).

An example of the implementation of the method:
The dry mixture obtained as a result of the implementation of this method included the following components:
   - cement of the brand CEM 1 42.5 N to an amount of 600 kg;
   - fly ash of Ryazan heat power plant to an amount of 400 kg;
   - microsilica MKU, 50 kg;
   - superplasticizer C-3 to an amount of 9 kg;
   - sodium oleate, 3 kg;
   - sodium gluconate, 1.5 kg;
   - Addiment ST-2, 2 kg;
   - biocide admixture Lastonox, 2 kg;
   - fiber, 1.5 kg;
   - polymer admixture, 5 kg;
   - combined pore-former, 20 kg.

The dry mixture is prepared as follows: The initial material (cement, fly ash, microsilica, superplasticizer, sodium oleate, biocidal admixture and fiber) are supplied into a preliminary storage hopper.

The pore-former is prepared separately before it is supplied into the mixer: It is carefully dosed and placed in the cyclic action mixer in the following order: dry foaming agent, PAP-2 aluminium powder, PAP-1 aluminium powder.

All components of the pore-former are thoroughly mixed; its mass must be 20 kg when it is introduced into the overall mixture.

The zeolite admixture is also prepared separately, for which purpose the dosed material is placed into the cyclic action mixer in the following order: zeolite, and subsequently, one-layered or multi-layered nanotubes are supplied, after being preliminary mixed in water and pulverised by means of an atomizer. The mass of the modified zeolite admixture must be 50 kg.

After the above-listed treatments, the pore former and the binder (Addiment, sodium gluconate and polymer admixture) are supplied into the mixer and mixed. The same mixer is charged with filler, biocide and modified zeolite admixtures and fiber, and again everything is thoroughly mixed so as to obtain a homogenous mixture. Subsequently the mixture, having passed the stage of preliminarily mixing, is placed into the reception hopper, whereafter it is subjected to mechanical impact-type activation on IDA equipment. As a result, there is an influence on the crystal hydrate formation process and the fibrillar microstructure formation process in the order of multi-microns.

Thereafter the finished material is supplied into a storage container to be kept until being unloaded for a customer.

Before use, the dry mixture is mixed with water with a water/solid ratio of 0.45, that is, 45 litres of water are added to 100 kg of dry mixture, and a thorough mixing is carried out.

After 28 days the cellular concrete has the following characteristics:
- an average specific weight of 500 kg/m³; a compression strength of 32 kg/cm²;
- a heat conductivity of 0.12; frost resistance: no destruction after 35 cycles.

The method according to the invention renders it possible to effect essential savings due to the absence of autoclaving treatment and the possibility of doing without steam-curing and heating. The dry mixture obtained by our method can be used immediately at the construction site according to the principle of "dilute with water". This method makes it possible to use existing mechanisms and machines provided for mixing and supplying concrete mixtures and solutions at construction sites (for instance the concrete pump EstrichBoy DC260/45).

## Claims

1. Method for producing composite cellular concrete, consisting of supplying the components of the compound into a mixer and mixing them to obtain a homogenous mass, introducing a dry pore-forming mixture into the obtained compound and subsequently mixing them together, **characterised in that** a previously prepared zeolite admixture containing nanotubes is additionally introduced into the obtained compound, whereafter the entire compound is subjected to mechanical impact-type activation at increased speeds on impact-type disintegrator-activators.

2. Method for producing composite cellular concrete according to claim 1, **characterised in that** the one-layered or multi-layered nanotubes are supplied into the mixer after preparatory mixing in water in pulverised form by means of an atomizer, the compound being mixed in the disintegrator-activator with a speed of 1500 to 3000 rpm.

## Amended claims

### Amended claims in accordance with Rule 137(2) EPC.

1. Method for producing composite cellular concrete, consisting of
- supplying the components of the composition into a mixer and mixing them to obtain a homogenous mass,
- then introducing a dry pore-forming mixture into the obtained composition and subsequently mixing them together,
- next separately preparing a zeolite admixture containing nanotubes introducing into the obtained composition the separately prepared zeolite admixture containing nanotubes,
- whereafter the entire composition is subjected to mechanical impact-type activation at increased speeds on impact-type disintegrator-activators.

2. Method for producing composite cellular concrete according to claim 1, **characterised in that**
- the separately prepared zeolite admixture dosed material is placed into the cyclic action mixer in the following order: zeolite, and subsequently, one-layered or multi-layered nanotubes are supplied, after being preliminary mixed in water and pulverised by means of an atomizer
- wherein the composition being mixed in the disintegrator-activator with a speed of 1500 to 3000 rpm.
